# EUROPEAN PATENT APPLICATION

(11) **EP 1 685 993 A1**
(43) Date of publication of application: **02.08.2006**
(21) Application number: 05381002.4
(22) Date of filing: 28.01.2005
(51) Int. Cl.: B60J 5/04

(54) **Supporting module for vehicle doors and mounting procedure for said module**

(71) Applicant: GRUPO ANTOLIN-INGENIERIA, S.A., 09007 Burgos (ES)
(72) Inventor: Gaecia Martin, José Francisco, 09004, BURGOS (ES); Osorio Ortega, David, 09001, BURGOS (ES); Marcos Gonzales, César, 09002, Burgos (ES)
(74) Representative: Esteban Perez-Serrano, Maria Isabel

(57) **Abstract**

The present invention relates to a supporting module (2) for vehicle doors and a mounting procedure for said module, wherein said module (2) incorporates the usual functional elements (13,15) provided in vehicle doors and is meant to facilitate the mounting tasks. It incorporates an element (3) meant to provide a waterproof seal (21) by covering one of the main openings (4) of the inner plate (1) of the door box, thereby separating the wet area and the dry area of the vehicle. The special configuration of the module (2) and the openings (4) of the inner plate (1) of the door box facilitate the mounting and removal tasks of the module (2) and the elements (13,15) incorporated on the door, as well as the establishment of a waterproof seal (21). In addition, the module is freed of all structural responsibilities.

## Description

### OBJECT OF THE INVENTION

The present invention relates to a supporting module for vehicle doors and the mounting procedure for said module, in which said module incorporates the usual functional elements provided in vehicle doors in order to simplify the mounting tasks.

This module is characterised by the fact that the door trim itself acts as the supporting element.

The module is also characterised in that the door trim does not provide the waterproofing function; instead, it incorporates at least one element meant to establish a waterproof seal by covering one or some of the main openings of the inner plate of the door box.

The inner plate of the box has, in addition to the minor opening housing devices such as the speaker, at least one main opening needed to mount the supporting module and its components. This opening (or openings) is covered by one or several sealing elements.

It characterises the fact that the sealing element has an individual attachment system, not external, for its attachment to the door box. Attaching this element permanently separates the wet and the dry area by a waterproof seal.

The dry area has the same conditions as the vehicle interior and lies between the door trim and the inner face of the inner plate of the door box, whose main openings are covered by the speaker, the plugs and mainly by the sealing element(s). The wet area corresponds to the box area between the outermost plates.

It is characterised by a special configuration of the module adapted to the openings of the inner plate of the door box that facilitate the mounting and removal operations of the elements that the module incorporates on the door, as well as providing a waterproof seal.

The module is characterised in that it is free of all structural responsibilities, which fall on the door itself.

Also pertaining to the invention is the procedure for mounting the module and its elements on the door, in which the main opening(s) of the door box plate that is(are) closed by the sealing element(s), together with the opening of the supporting module that houses the insert, allow the independent mounting and removal of each functional element of the door.

### BACKGROUND OF THE INVENTION

Supporting modules for vehicle doors incorporating several functional elements, such as a speaker, latch, window lift, etc. are known in the state of the art.

These supports may have merely supporting roles or may additionally have structural roles, reinforcing the door.

Supporting modules are employed placed in the door box which are then covered by the door trim. Also known are supporting door panels that require the use of panels to separate the dry and the wet area.

In any case, it is always necessary to ensure the seal between the dry and the wet area, for which several solutions are also known.

Worth mentioning are the following documents, cited as solutions to the above:
Patent WO03031233 relates to a door trim module that incorporates several functional elements (such as a speaker, door latch, etc.) to which is attached a flexible sheet that acts as a shield against water passage to provide a waterproof seal. This flexible sheet is attached to the door module by an adhesive and is provided with a waterproof gasket on all or part of the contour of the water shield. It also has a peripheral shape similar to that of the door trim module.
US Patent 6510657 relates to a supporting module for vehicle doors that supports functional elements such as the window lift, speaker ot latch. Said module is formed by two panels joined by a rigid structure, which are placed in the housing provided for such purpose on the inside of the door with a configuration similar to that of the modules, so that they fit in perfectly and are sealed to provide a waterproof union.
Another example is US Patent 6767049, which relates to a door trim panel for vehicle doors to which a panel is attached that acts as a water shield preventing water to pass from the outside of the vehicle to its interior compartment, having a similar configuration to the panel. This waterproof shield is sealed to the door trim by an adhesive union and is provided with several orifices, which are also surrounded by a sealing adhesive, which allow mounting the various functional elements typically incorporates in vehicle doors.
US Patent 5904002 relates to a structural supporting module for motor vehicle doors. It is a door trim module that supports functional elements such as the latch , window lift, speaker and switches, but which requires an additional panel to provide a waterproof seal. It is a sheet with a similar configuration to that of the supporting panel that is joined to it by an adhesive.

The present invention describes a door trim module that incorporates several functional elements of the door and lacks any structural responsibilities.

The present invention facilitates the mounting and removal operations of the panel and the various functional elements incorporated, and ensurs a waterproof seal in a simple manner by incorporating a sealing element that is directly attached to the door housing.

### DESCRIPTION OF THE INVENTION

The present invention relates to a supporting door trim module for vehicle doors and to the mounting procedure for said module and the elements it incorporates. The door trim is an element made of a flexible material, preferably plastic, which is not structural and incorporates several functional elements of the door.

In a conventional motor vehicle door two differentiates areas are normally defined: the dry area and the wet area, as indicated below.

The dry area is generally located between the face of the door box nearest the interior compartment and the door trim. This area has the same conditions as the interior compartment of the vehicle.

The wet area is located inside the door box, between the two outermost door plates. Water and dust enter this area, so that all components placed in this area must be suitably protected and able to withstand these conditions. In general, this implies an increased cost of these components.

In any case, it is necessary to have sealing means that separate the dry and wet areas of the door box adequately.

In the present invention, the door trim mounts or pre-mounts (in the case that a component is mounted temporarily on the panel, or needs an additional operation for its final mounting) several functional components of the door, thereby performing the trim function as well as that of supporting element. To mount the components located in the wet area on the door, the inner plate of the door box is provided with at least one main opening; later, as will be described below, all main openings will be covered with a sealing element that establishes a waterproof seal to separate the dry area from the wet area, ensuring the seal.

The inner plate of the door box is also provided with another opening that is covered by the speaker, and other secondary orifices for mounting or regulating other components attached to the door. These orifices will also be covered or sealed later to ensure a full watertight seal.

In this way, the separation between the dry and the wet area is established by the inner plate of the door box, and the waterproof seal is achieved by a sealing element that covers the main opening of the plate, precisely the opening that provides access to the interior of the door box that constitutes the wet area. As stated above, there may be several main openings, in which case each one will be covered by a sealing element.

This sealing element is characterised by having own attachment means that allow a fast and simple attachment to the door box plate, as well as other attachment means, either temporary or permanent, to the trimming. In addition, a very reliable waterproof seal is achieved, the seal area is small compared to the total area of the door.

In the case of using temporary means of attachment for the sealing element to the door trim , these allow two movements of the sealing element with respect to the panel: a vertical movement and another movement perpendicular to the panel.

The sealing element and the door trim can also be attached by permanent attachment means, i.e. attachment means that do not allow a relative movement between them, unlike the aforementioned temporary means. Therefore, the door trim and the sealing element move jointly in their coupling to the door box plate.

In addition, as the door trim does not have to provide the waterproof seal, the assembly does not require the use of gaskets or other elements required to ensure the waterproof seal.

The door trim also has a supporting nature and has several functional elements of the door incorporated, which can be:
1. Mounted permanently; these are components that belong to it, as they are mounted permanently on the panel. This is the case with the base of the pocket for containing objects (or the pocket front, according to each case) or the window-hugging profile;
2. Pre-mounted; this means that they require a final mounting operation to attach them to the door in their working position. This is the case with the door handle, the speaker or the sealing element;
3. Temporarily mounted; this is, their union to the panel is temporary, and only to allow handling the assembly until their final mounting as their working position is in the door itself. This is the case with the window lift motor, rail, drum lid or external door opening actuator.

In any case, the door trim also acts as a supporting element that facilitates the mounting operations of the various functional components of the door, reducing the number of operations required and the time of execution by simplifying the handling and transportation of the components until their final mounting on the door.

In addition, after all the components have been mounted on the foor it is possible to remove each one independently without having to dismantle the entire assembly , such as when it is necessary to repair or replace any component.

Some of these components require a structural attachment, such as the door handle, the latch or the window lift rails, which must be attached directly to the door to which the loads are transmitted.

A special element is the door insert. This part remains disassembled during the entire assembly, as it is the last part attached to the panel. The insert covers an opening in the panel that allows the final assembly of the door window and other accessories located in the dry area of the vehicle. The insert is joined to the door panel at the end of the mounting operations by elements that can belong to the insert itself or be external to it.

It is necessary that the door trim and the elements it incorporates can be mounted easily and quickly. For this reason, the door trim and the door box have openings that simplify these mounting operations and provide access to the wet area from the dry area.

To execute the mounting, the components located in the wet area of the vehicle must be mounted first. To access this area the innermost plate of the door box has at least one main opening that provides access to the wet area from the dry area.

After this the innermost plate is sealed with the corresponding sealing elements and the components located in the dry area are mounted through the opening made in the door trim with the insert removed. The insert is the last element incorporated in the panel.

Mounting of the various elements is also made possible by several auxiliary orifices and attachment elements provided with self-centering means that are provided in the door trim and the door box.

Also considered part of the present invention is the procedure for mounting the module, which will be described in detail further below.

Lastly, the sealing element allows integrating other additional components, such as an energy absorber in case of lateral impacts. It can also perform other additional functions such as protection against undesired access to the latch from the outside.

### DESCRIPTION OF THE DRAWINGS

The present descriptive memory is accompanied by a set of drawings that illustrate the preferred example in a non-limiting sense.

Figure 1 shows on the top an elevation view of an embodiment of the door trim module on the side facing the vehicle interior and on the bottom an elevation view of the rear face of the door trim module in the case that the panel incorporates a single sealing element.

Figure 2 shows the plate of the door box seen from the dry area with a single main opening for access to the wet area of the door box.

Figure 3 shows the door trim module as seen from the dry area without the insert, leaving an opening through which some of the elements incorporated in the panel can be seen.

Figure 4 shows a representation of the sealing element with a latch. On the bottom left is an embodiment of a form of attachment to the door plate with a tab and on the bottom right is is an enlarged view of this form of attachment with the sealing element.

Figures 5 shows a cross section of the assembly of the bottom edge of the sealing element on the door box plate and an enlarged view of the compressed sealing element.

Figure 6 shows a cross section of the door box plate and the sealing element in an initial position, before placing the sealing element on the corresponding main opening of the door box plate, and in a final position in which the sealing element covers the main opening.

Figure 7 shows an embodiment of the temporary attachment elements of the sealing element to the door trim and an enlargement showing the possible relative movements between them.

### DETAILED DESCRIPTION OF SEVERAL PREFERRED EMBODIMENTS

The present invention consists of a supporting module for vehicle doors, intended for installation on doors of motor vehicles.

It consists of a door trim (2) that acts as a non-structural supporting element, incorporating several functional components of the door, to facilitate its handling and transport to its final working position. This panel (2) is free of any structural responsibility and does not provide the waterproof seal. The waterproof seal is provided by incorporating a component, referred to as the sealing element (3), which is described further below.

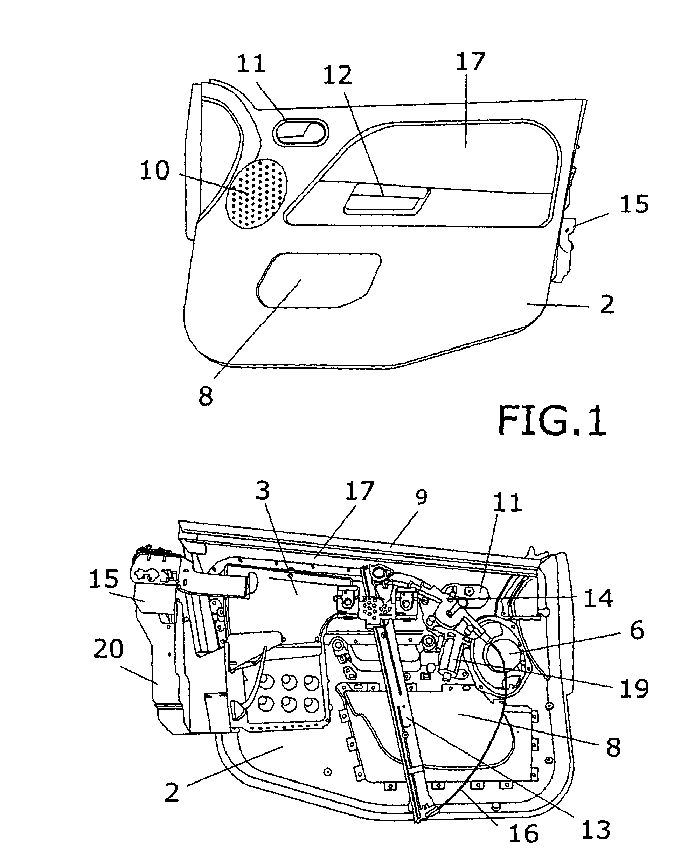

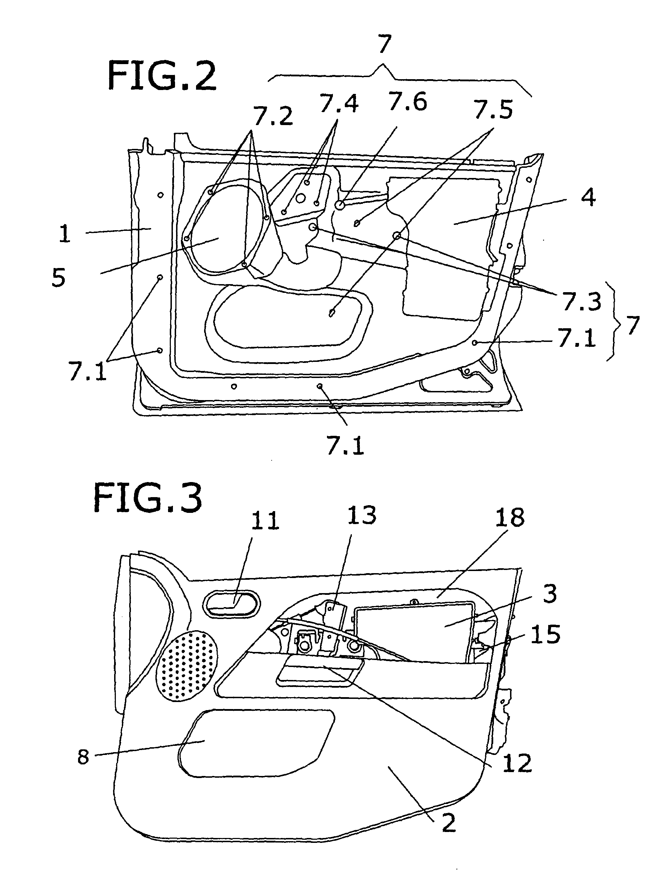

The function of the door trim (2) as a supporting module simplifies the handling and mounting operations of the various functional components of the door. In order to allow mounting these components, as well as their independent removal, the inner plate (1) of the door box has at least one main opening (4) and an additional opening (5) to house the speaker (6), as shown in figures 1 and 2, as well as the secondary orifices (7) needed to mount or regulate said components.

The door box (1) can have more than one main opening (4), each one closed with a waterproof seal by the corresponding sealing element (3). The examples shown correspond to the case of a single main opening (4) and therefore to a panel (2) incorporating a single sealing element (3).

Hereinafter we will refer only to the case of one main opening (4) and one sealing element (3), considering however at all times that there may be more than one opening (4) and thus more than one sealing element (3).

As regards the aforementioned secondary orifices (7), this denomination extends to different minor openings, shown in figure 2, which to complete the description are now described briefly.

The door box plate has openings (7.1) located peripherally on the bottom and right and left sides, meant to anchor the door trim (2). The attachment is effected in this case by clipping the panel (2) and the plate (1) of the door box, the clip itself ensuring a waterproof seal.

To open the speaker (6) to the plate (1) of the door box, the speaker opening (5) is provided around it with the corresponding minor openings (7.2) to screw the speaker (6) onto the plate (1). In this case the screws ensure the waterproof seal as well.

Other openings provided are the openings (7.3) intended to house the body of the door handle (12) and the openings (7.4) that allow anchoring the window lift motor (19). In this case, the attachment and the waterproof seal is also ensured by the attachment screws.

The openings (7.5) that allow attaching the window lift rail or rails (13) are covered by corresponding plugs that ensure a waterproof seal.

Another opening (7.6) is required to regulate the window anchoring, which is also covered by the corresponding waterproof plug.

As mentioned above, one can distinguish in the door a dry area with the same conditions as the vehicle interior and a wet area that is exposed to the entry of dust and water from the outside. Any components located in the wet area require a suitable protection. In any case, the two areas must be separated by a waterproof seal.

In the present invention the separation of the dry area and the wet area is established by the inner plate (1) of the door box, while the waterproof seal is established by the sealing element (3) that covers the main opening (4) of said plate (1). The sealing element (3) is also incorporated in the premounted door trim (2) that is supported by a temporary attachment; later, several final operations allow the final mounting on the doorplate (1).

As shown also in figure 2, the inner plate is also provided with the main opening (4) (which provides access to the wet area), with another opening (5) that is the housing of the speaker (6) and other secondary orifices (7) that are adequately sealed to ensure a full seal between the wet and dry areas, as mentinoed above.

Figure 1 shows an elevation view of the door trim (2) with several compoennts incorporated. The top part of the figure shows the side facing the vehicle interior. The bottom part of the figure shows the opposite side, which faces the dry area of the door box.

The door trim (2) acts as a supporting element in which some elements are fixed, this is, in their working position, others are premounted and require an additional operation to fix them in their final working position and others have a temporary attachment, i.e. they are incorporated to the panel (2) to facilitate its handling and mounting but are fixed in different positions, as described below.

In the embodiment shown in figure 1, the base of the pocket (8), the window-hugging profile (9) and the clips (not shown) for attaching the panel (2) to the door, are components that are attached permanently to the door trim (2).

In this example, the base (8) of the pocket is mounted permanently on the panel (2) and the front of the pocket is part of the panel. In other embodiments the opposite may be true, so that the front of the pocket is mounted permanently on the panel and the base (8) forms part of it.

Also in the example shown in figure 1, the grille (10) of the speaker (6) is also fixed to the panel (2), although in other embodiments it may be a part (10) independent of the panel (2) that is attached later, although it may be premounted on the panel (2) to facilitate the manipulation of the assembly.

Other components are already mounted in their working position in the door trim (2), such as the wire harness and the inner actuation (11) of the door.

The body of the handle (12) and the speaker (6) are instead premounted on the door trim (2) for its handling and transport to the door (1), where they require final operations to fix them in their working position.

The door trim (2) also incorporates elements which, as said panel (2) is a supporting element, are only premounted on it to facilitate their handling, but which must be fixed to the door (1) later. This is the case of the latch (15) and its case (20), and the window lift assembly consisting of the window lift rail or rails (13), the motor (19), a reducer, transmission means (16), the drum lid (14) and the means for redirecting the transmission means.

Figure 1 also shows the insert (17) and the sealing element (3).

The insert (17) remains disassembled while the components are mounted on the door (1), as it reveals an opening (18) in the door trim (2) required to mount the window glass and other accessories on thedoor, as will be described later. Therefore, the insert (17) is a disassembled part that is joined to the door trim (2) in a temporary manner.

The sealing element (3) is another element premounted on the panel (2) that is not definitively attached to the door (1) until one of the final mounting operations after positioning the module, as the opening (4) that it covers in the door box plate (1) provides access to the wet area of the box for mounting the components located in this area.

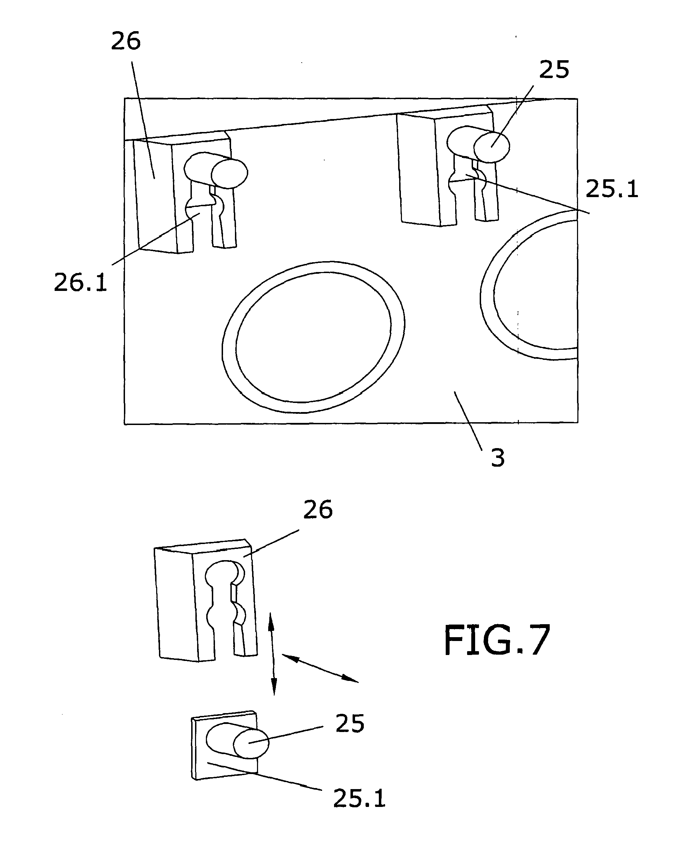

Figure 7 shows an embodiment of the means for temporary attachment of the sealing element (3) to the door trim (2).

The boxes (26) have slits (26.1) that allow a vertical movement of the picot (25) in the box (26). Horizontal movement perpendicular to the door trim (2) is also possible; the retaining heads (25.1) prevents the pivots(25) from leaving the boxes (26) of the sealing element (3). The bottom part of figure 7 shows said vertical and horizontal movements by arrows.

Described next is the mounting procedure for the various functional elements of the door shown in figure 1, from the door trim (2) to its final working position on the door (1).

Starting with the door trim (2) as a supporting element with the aforementioned elements incorporated, shown in figure 1, the mounting operations for the functional component and door trim (2) on the door are the following:
- 1.: Disengaging the window lift assembly and positioning it in the wet area of the door box;
- 2.: To execute this positioning and attachment the wet area is accessed through the main opening (4) provided in the iner plate (1) of the door box which remains open. In addition, there is no other element covering the front part of the box plate (1), so that the operator can see the various orifices (7) required to attach the aforementioned components;
- 3.: Attaching the window lift motor (19) in the dry area of the door (1) and connecting it to the drive chain (16) with the corresponding wire harness. In this operation the worker passes the window lift assembly through the main opening (4) and, with the motor (19) in view, attaches it through the corresponding openings (7.4) to then attach the drum lid (14);
- 4.: Connecting the latch (15) to the various electrical and/or mechanical opening/closing controls;
- 5.: Passing the latch (15) through the main opening (4) providing access to the wet area;
- 6.: Connecting the electrical and mechanical terminals to the components mounted on the door trim (2);
- 7.: Mounting the door trim (2) on the door (1). The insert (17) has been removed from the panel (2) to reveal the opening (18) that houses it, in order to continue with the following mounting operations. The sealing element (3) is prepositioned on the panel (2);
- 8.: Mounting the window glass. Accessing through the space (18) left open by the insert (17), the glass is placed and attached to the carriages of the window lift guides (13);
- 9.: Attaching the sealing element (3) on the door (1), covering the main opening (4) providing access to the door box thorough the space (18) left open by the insert (17), as described later in greater detail;
- 10.: Sealing the secondary orifices (7), accessing through the insert space (18);
- 11.: Mounting the insert (17) on the panel (2). In this embodiment the insert (17) is attached by clipping. Other modes of attachment are also possible;
- 12.: Screwing the body of the handle (12) onto the door (1).

The mounting operations described can be completed by the following for a more detailed description.

The latch (15) and latch case (15) are joined to the sealing element (3) and the assembly is prepositioned in the door trim (2). Therefore, when the latch (15) is mounted the latch (15), its case (20) and the sealing element (3) are positioned in a single operation.

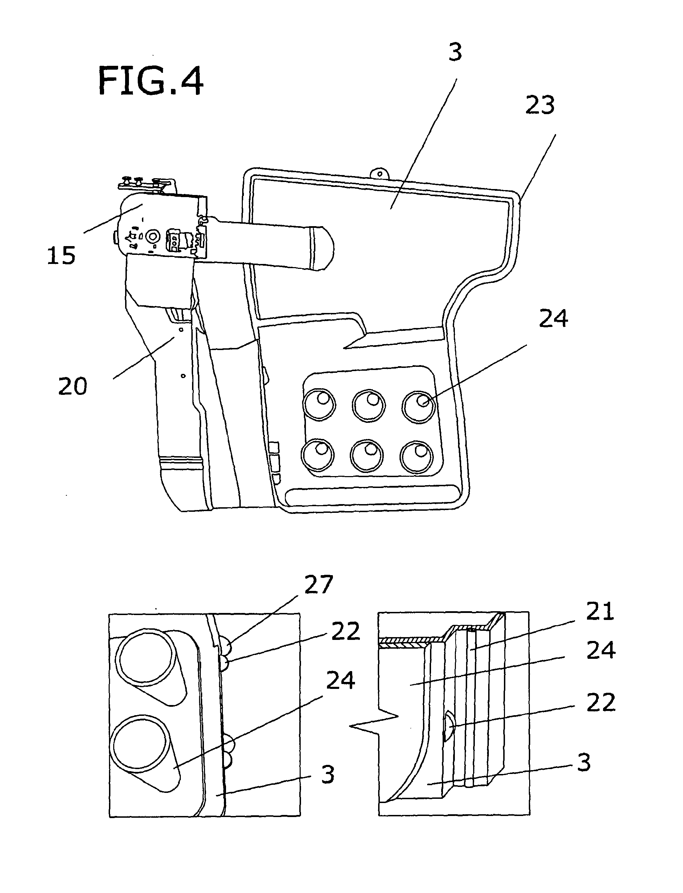

Figure 4 shows the sealing element (3) and its elements (22) for attachment to the door (1).

The sealing element (3), as mentioned above, is the element that closes the main opening (4) of the inner plate (1) of the door box that provides access to the wet area. This element (3) provides a waterproof seal between the dry area and the wet area.

Said element (3) is made of plastic and adapted to the shape of the main opening (4) of the door box. In addition, to ensure the waterproof seal the element (3) is also provided with an elastic waterproof gasket (21) and protrusions (22) that maintain the element (3) in its working position, ensuring its correct operation as they allow attaching the sealing element (3) to the door box (1).

As shown in figure 4, the sealing element (3) has tabs (22) on the perimeter of the side facing the wet area of the box. On the perimeter of the element (3), opposite the tabs (22), the sealing element (3) is provided with a lip (23) that houses the waterproof gasket (21). Thus, between the peripheral lip (23) and the tabs (22) is a space approximately equal to the thickness of the plate (1) of the door in which it is mounted, plus a space filled by the waterproof gasket (21) so that a pressure makes the gasket (21) give until the tabs (22) of the sealing element (3) can reach beyond the inner supporting plane.

The sealing element (3) is premounted on the door trim (2) with a temporary attachment that relates them allowing a certain relative movement between the parts (2) and (3), as mentioned before. Its final mounting is performed by the following steps.

First the sealing element (3) is positioned resting its peripheral edge (23) on the main opening (4) of the box, on its dry area, slightly displaced from its final position. The position is such that the peripheral gasket (21) rests on the plate (1) and the tabs (22) are opposite incuts (27) made in the plate (1) for this purpose. In this position, exerting a pressure to overcome the resistance of the compression of the waterproof gasket (21) allows the tabs (22) to overcome the incuts (27).

Secondly, the sealing element (3) is slided in a vertical downwards sense to its final position, so that all the tabs (22) rest on the side of the plate opposite that in which the sealing element (3) rests, as it is not opposite the incuts (27).

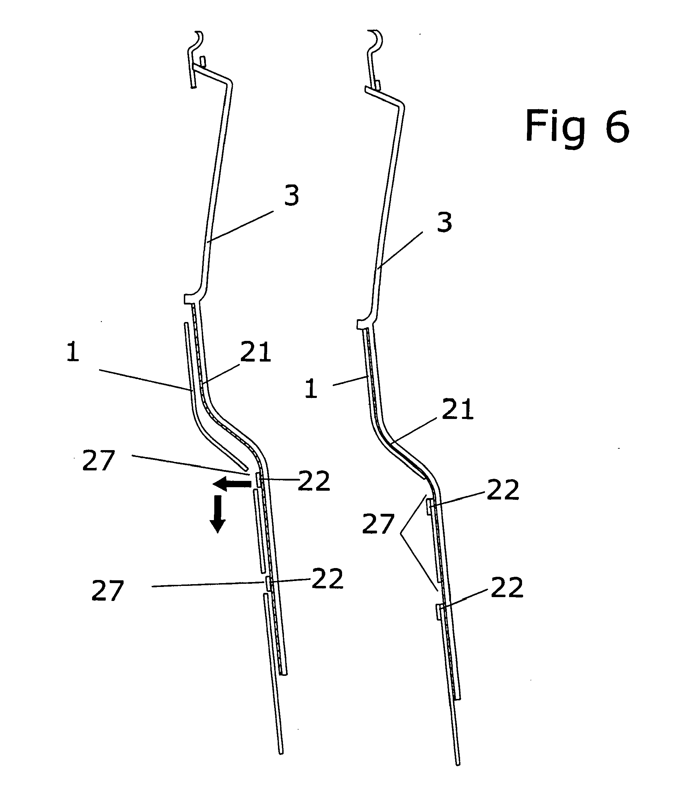

Figure 6 shows a cross section of the sealing element (3) and the door box plate (1).

In the drawing on the left of figure 6 the sealing element (3) is prepositioned with respect to the main opening (4) such that the tabs (22) are opposite the incuts (27) made in the door box plate (1). Two arrows indicate the above-described movements of the sealing element (3) to reach their final position from this starting position.

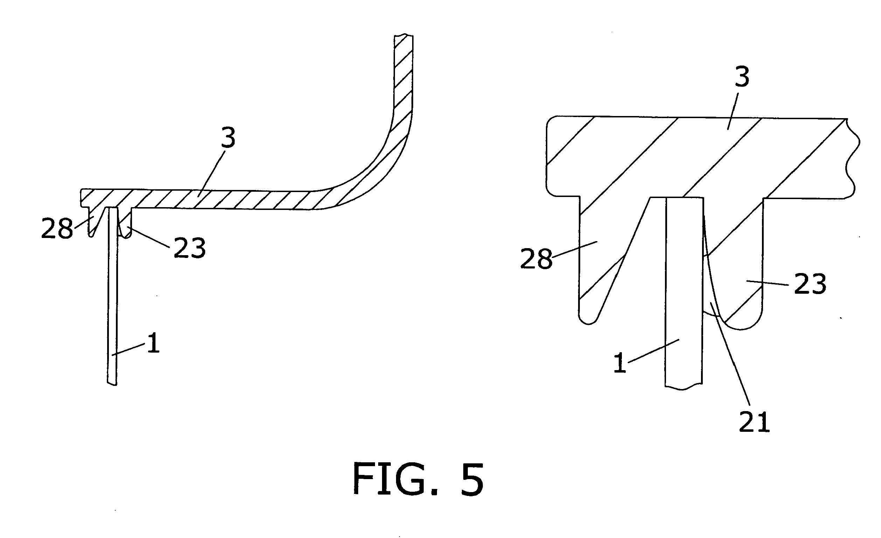

Figure 5 shows the attachment of the bottom edge of the sealing element (3) to the door box plate (1). The bottom edge has a second lip (28) such that the section of the edge has a wedged "V" shape. The waterproof gasket (21) in the bottom part of the sealing element (3) is placed between the two lips: the peripheral lip (23) surrounding the entire element (3) and the second bottom lip (28).

When the sealing element (3) is lowered the wedge action is favoured, placing the plate (1) between the two lips (23, 28) and pressing the waterproof gasket (21) as shown in the enlargement of figure 5.

Lastly, the attachment of the sealing element (3) is strengthened by an additional attachment element such as a screw or a rivet.

Other means for attaching the element (3) to the plate (1) are also possible. For example, by pairs of tabs. This is, each tab (22) is accompanied by an additional tab to form pairs, so that once mounted on the plate (1) of the door box it will be embraced by each pair of said tabs (22), one tab of each pair on either side of the plate.

Another possibility is to attach the sealing element (3) to the panel (2) using permanent attachment means, which do not allow the relative displacement between them, such as screws. Thus, when the sealing element (3) is displaced to attach it to the door box (1), the element (3) moves together with the panel (2).

In addition, the element (3) providing the waterproof seal can perform additional functions. Thus, it can incorporate energy absorption elements in case of impact, such as deformable cones (24).

Another function that can be integrated in the sealing element (3) is protection against undesired access from outside the vehicle to the latch (15). For this purpose, a skirt can be included to protect sensitive parts against undesired opening.

The essence of the invention is not affected by variations in the materials, shape, size and arrangement of the component elements, described in a non-limiting manner such that it allows its reproduction by an expert.

## Claims

1. Supporting module for vehicle doors constructed as a non-structural panel, meant to act as a trim on doors having a box with at least one main opening to allow manual access by an operator for mounting, essentially, the components installed in the wet area, the box being able to have other openings and orifices not intended for manual access by the operator, such as the speaker housing or auxiliary orifices for allowing tools to pass, **characterised in that** the door trim (2), on each main mounting opening (4) provided in the inner plate (1) of the door box, incorporates a sealing element (3) meant to cover it in order to provide a waterproof seal between the dry area and the wet area of the door; wherein the door trim (2) is also provided with an access opening (18) for completing the final mounting operations of the elements located in the dry area and the additional sealing element (3).

2. Supporting module for vehicle doors according to claim 1, **characterised in that** the door trim (2) incorporates a single sealing element (3) meant to cover a single main mounting opening (4) present in the inner plate of the door box (1).

3. Supporting module for vehicle doors according to claim 1, **characterised in that** between the door trim (2) and the sealing element (3) are temporary mutual attachment means (25, 26) that allow a relative motion or play of the two parts (2, 3) to allow the attachment operation of the sealing element in the main opening (4) of the inner door plate (1).

4. Supporting module for vehicle doors according to claim 1, **characterised in that** the attachment between the door trim (2) and the sealing element (3) is performed by permanent attachment means.

5. Supporting module for vehicle doors according to claim 1, **characterised in that** the access opening (18) for completing the mounting operations is covered by a insert (17).

6. Supporting module for vehicle doors according to claim 1, **characterised in that** on the door trim (2) a pocket base (8) is mounted permanently on the panel and a pocket front forms part of this panel to configure a pocket for containing objects.

7. Supporting module for vehicle doors according to claim 1, **characterised in that** a pocket front is mounted permanently on the panel and a pocket base is part of the panel to configure the pocket for containing objects.

8. Supporting module for vehicle doors according to claim 1, **characterised in that** the door trim (2) incorporates a wire harness for wiring the electrical functional elements of the door.

9. Supporting module for vehicle doors according to claim 1, **characterised in that** the door trim (2) incorporates a latch (15) and its case (20) joined to the sealing element (3) and prepositioned on the panel (2).

10. Supporting module for vehicle doors according to claim 1, **characterised in that** the door trim (2) incorporates at least one window lift rail (13), as well as a reducer motor (19), transmission means (16), a drum lid (14) and means for redirecting the transmission means.

11. Supporting module for vehicle doors according to claim 10, **characterised in that** the door trim (2) incorporates a single window lift rail (13), a reducer motor (19), transmission means (16), a drum lid (14) and means for redirecting the transmission means.

12. Supporting module for vehicle doors according to claim 1, **characterised in that** the sealing element (3) incorporates an energy-absorbing element (24) in case of a lateral impact.

13. Supporting module for vehicle doors according to claim 1, **characterised in that** the sealing element (3) incorporates means for securing the latch (15).

14. Supporting module for vehicle doors according to claim 1, **characterised in that** the insert (17) is attached to the door trim (2) by clip means.

15. Supporting module for vehicle doors according to claim 1, **characterised in that** the door trim (2) incorporates a grille (10) for the speaker (6).

16. Supporting module for vehicle doors according to claim 1, **characterised in that** the sealing element (3) has a peripheral waterproof gasket (21).

17. Supporting module for vehicle doors according to claim 1, **characterised in that** the means for attaching the sealing element (3) to the plate (1) of the door box are peripheral tabs (22).

18. Supporting module for vehicle doors according to claim 1, **characterised in that** the means for attaching the sealing element (3) to the plate (1) of the door box are pairs of peripheral tabs (22).

19. Supporting module for vehicle doors according to claim 1, **characterised in that** the upper attachment of the sealing element (3) to the plate (1) of the door box is achieved by screws.

20. Supporting module for vehicle doors according to claim 1, **characterised in that** the lower edge of the sealing element (3) is provided with a second lip (28) such that the section of the edge has a wedge-like "V" shape.

21. Supporting module for vehicle doors according to claim 1, **characterised in that** the door box (1) is provided with secondary orifices (7) for mounting and regulating the functional components of the door.

22. Supporting module for vehicle doors according to claim 21, **characterised in that** the secondary orifices (7) are sealed by sealing elements or gaskets to provide a waterproof seal between the wet area and the dry area.

23. Supporting module for vehicle doors according to claim 1, **characterised in that** the temporary attachment means (25, 26) consist of pivots (25) that emerge from the door trim (2) and end at a retaining head (25.1), which fit in slits (26.1) made in boxes (26) attached to the sealing element that allow a relative vertical movement and a horizontal movement perpendicular to the door trim (2) between the sealing element (3) and the door trim (2).

24. Mounting procedure of the door trim module for vehicle doors as claimed in previous claims, **characterised in that** the assembly is performed by the following sequence of operations:
- Operations prior to mounting the sealing element (3) on the elements that require the main opening (4) to be uncovered for their installation
- Mounting the door trim (2) on the door (1), where the panel (2) has the insert (17) removed to reveal the opening (18) that houses it, in order to continue with the subsequent mounting operations
- Mounting the window by accessing through the opening (18) left by the insert (17), in which it is placed and attached to the carriages of the window lift rails (13)
- Attaching the sealing element (3) to the door (1) covering the main access opening (4) to the door box through the space (18) left open by the insert (17)
- Sealing the secondary orifices (7), accessing through the space (18) of the insert
- Mounting the insert (17) on the panel (2)
- Bolting the body of the handle (12) on the door (1).

25. Mounting procedure of the door trim module for vehicle doors as claimed in claim 24, **characterised in that** the operations prior to mounting the sealing element (3) on the elements that require the main opening (4) to be uncovered for their installation are the following:
- Disengaging the door box (1) from the window lift assembly and placing it in the wet area
- Attaching the window lift motor (19) in the dry area of the door (1) and connecting it to the window lift assembly with the corresponding wire harness
- Connecting the latch (15) to the various electrical and/or mechanical opening/closing means
- Passing the latch (15) through the main opening providing access to the wet area
- Connecting the electrical and mechanical terminals to the components mounted on the door panel (2).

26. Mounting procedure of the door trim module for vehicle doors as claimed in claim 24, **characterised in that** to mount the sealing element (3) in the door box (1) the sealing element (3) is placed so that its peripheral edge rests on the main opening (4) of the box, on its dry area, wherein the peripheral gasket (21) rests on the plate (1) and the tabs (22) are opposite incuts (27) made in the plate (1) such that the tabs (22) overcome the incuts (27) by pressure; in this position, the sealing element (3) slides vertically down to its final position in which all the tabs (22) rest on the side of the plate (1) opposite the side that supports the sealing element (3).
